# EUROPÄISCHE PATENTSCHRIFT

(11) **EP 0 903 173 B1**
(45) Veröffentlichungstag und Bekanntmachung des Hinweises auf die Patenterteilung: **09.10.2002**
(21) Anmeldenummer: 98890241.7
(22) Anmeldetag: 19.08.1998
(51) Int. Cl.: B01D 53/26, B01D 53/22

(54) **Membrantrockner für feuchte Luft**
Membrane dryer for humid air
Sécheur à membrane pour air humide

(30) Priorität: 10.09.1997 AT 152697
(43) Veröffentlichungstag der Anmeldung: 24.03.1999
(73) Patentinhaber: HYGRAMA AG, 6300 Zug (CH); ultratroc gmbh Drucklufttechnik, 24941 Flensburg (DE)
(72) Erfinder: Kühnelt, Herbert, Dipl.-Ing, 1040 Wien (AT)
(74) Vertreter: Laminger, Norbert, Mag.

(56) Entgegenhaltungen:
- EP-A- 0 546 662
- EP-A- 0 669 158
- US-A- 5 605 564
- DATABASE WPI Section Ch, Week 9719 Derwent Publications Ltd., London, GB; Class J01, AN 97-207252 XP002103353 & JP 09 057043 A (KURODA SEIKO KK) , 4. März 1997

## Beschreibung

Die Erfindung bezieht sich auf einen Membrantrockner für feuchte Luft, mit einem Gehäuse, das an der Eingangsseite einen Anschluß für die Zuführung der zu trocknenden Luft und an der Ausgangsseite einen Anschluß für die Ableitung der getrockneten Nutzluft aufweist, und mit einem im Gehäuse angeordneten Hohlfadenbündel, dessen Hohlfäden aus einer für Wasserdampf hochselektiven Membran bestehen, wobei die zu trocknende komprimierte Luft durch die Hohlfäden des Hohlfadenbündels hindurchgeleitet wird, an dessen Ausgangsseite ein Spülluftkanal abzweigt, in den eine Drosselstelle zum Expandieren der Spülluft eingebaut und der in das Hohlfadenbündel im Gehäuse zurückgeführt ist, in dem die an der Drosselstelle expandierte Spülluft im Gegenstrom den Hohlfäden außen entlanggeführt ist, wobei sie den durch die Hohlfäden diffundierten Wasserdampf aufnimmt und im Bereich der Eingangsseite des Hohlfadenbündels ins Freie abführt, wobei ein durch die Nutzluft gesteuertes, als Strömungsfühler wirkendes selbsttätiges Absperrventil, z.B. ein federbelastetes Rückschlagventil, eingebaut ist, das zugleich den Spülluftkanal steuert.

Membrantrockner dieser Art sind bekannt. Durch die Expansion der abgezweigten Spülluft sinkt deren Taupunkt stark ab, so daß die Spülluft beim Zurückströmen entlang der Hohlfäden die von der Hochdruckseite diffundierte Feuchtigkeit aufnimmt. Auf diese Weise kann der Drucktaupunkt je nach Druck und Spülluftmenge typischerweise etwa um 30° bis 50° C abgesenkt werden. Nachteilig bei dieser Anordnung ist der dauernde Spülluftbedarf, der 15 bis über 30 % der dem Membrantrockner insgesamt zugeführten Luftmenge betragen kann. Unabhängig davon, ob die Nutzluft dauernd oder nur zeitweise benötigt wird, bleibt der Spülluftbedarf immer bestehen und richtet sich nach der größten Durchflußmenge, solange der Trockner nicht abgeschaltet wird.

Um den Spülluftbedarf zu verringern, ist es bereits bekannt, den Nutzluftstrom automatisch zu erfassen und den dafür erforderlichen individuellen Spülluftbedarf zu berechnen. Dazu ist eine elektronische Steuerung erforderlich, die mit den Ergebnissen umfangreicher Meßreihen und der Kenntnis des charakteristischen Verhaltens der Membranen und der Module, also der Hohlfadenbündel, programmiert wird. Durch Taktung eines Ventils durch die elektronische Steuerung wird nur soviel Spülluft bereitgestellt, wie für die Trocknung der abgenommenen Nutzluft erforderlich ist. Dadurch kann eine Kostenreduzierung für die Drucklufttrocknung, insbesondere bei großen Leistungen oder stark schwankendem Bedarf, erreicht werden. Dazu ist allerdings die von außen gesteuerte, mit Energie versorgte und vorprogrammierte elektronische Zusatzausrüstung erforderlich, die die gesamte Anordnung erheblich verteuert, den Aufwand erhöht und die Betriebssicherheit herabsetzt.

Aus der JP-A-09 057 043 ist ein Membrantrockner bekannt, bei welchem ein vom eintretenden Nutzluftstrom geschaltetes Absperrelement gleichzeitig den Spülluftkanal steuert, so daß bei Durchströmung des Trockners der Spülluftkanal proportional zur Durchströmung geöffnet wird. Durch diese Ausgestaltung des Membrantrockners ist weder eine Fremdsteuerung noch Fremdenergie erforderlich. Der Spülluftstrom wird selbsttätig an den jeweiligen Bedarf angepaßt und bei fehlender Nutzluftentnahme abgeschaltet. Allerdings ist bei dieser Konstruktion der Spülluftstrom immer mit dem Nutzluftstrom direkt gekoppelt. Insbesondere bei Trocknern für großen Luftdurchsatz ist es sehr schwierig, die Steuereinheit Nutzstromsensor - Spülluftventil so zu gestalten, daß sie zufriedenstellend funktioniert.

Der Erfindung liegt die Aufgabe zugrunde, den Spülluftbedarf der eingangs genannten Membrantrockner auf einfache Weise in zwei Stufen - auch bei großem Luftbedarf - an den Verbrauch anzupassen, ohne daß Eingriffe von außen, Fremdenergie oder eine komplizierte Zusatzeinrichtung erforderlich ist.

Mit der Erfindung wird dieses Ziel dadurch erreicht, daß in den Spülluftkanal ein eigenes Spülluftventil, z.B. ein 2/2-Wegeventil eingebaut ist, das über eine vom Nutzluftkanal abzweigende und vom Absperrventil gesteuerte Steuerleitung betätigt wird. Diese Bauart ist auch für größere Membrantrockner geeignet, wobei das Absperrventil lediglich eine Steuerleitung mit vergleichsweise geringem Luftdurchsatz öffnet und schließt, über die das Spülluftventil betätigt wird. Besonders bei dezentral angeordneten Trocknern, die Einrichtungen schützen, die sehr empfindlich sind und/oder besonderen Temperaturschwankungen ausgesetzt sind, ist eine solche Steuerung vorteilhaft. In vielen Fällen schwankt der Luftverbrauch solcher Einrichtungen nicht erheblich. Allerdings sind solche Einrichtungen nur zeitweise und mit Pausen dazwischen in Betrieb. Besonders in solchen Fällen ist die erfindungsgemäße Ausrüstung des Trockners von besonderem Vorteil.

Vorteilhafterweise ist das Spülluftventil als normal-geschlossenes Membranventil ausgeführt, das in Öffnungsrichtung über einen vor dem Absperrventil abzweigenden Kanal und in Schließrichtung über einen hinter dem Absperrventil abzweigenden Kanal beaufschlagt ist. Für die Schaltung des Membranventils wird in diesem Fall das Druckgefälle über das Absperrventil ausgenützt, das vom Durchfluß abhängt. Durch eine entsprechend große Membranfläche gegenüber der Schaltfläche des Spülluftkanals kann die Verstärkung so beeinflußt werden, daß eine sehr einfache Spülluftsteuerung erreicht werden kann.

Die Steuerleitung kann erfindungsgemäß mit einer dauernd offenen Entlüftungsdüse versehen sein, die ohne weitere Vorkehrungen sicherstellt, daß beim Abschließen der Steuerleitung diese selbst und damit die Steuerseite des Spülluftventils druckentlastet wird, so daß das Spülluftventil sich schließen kann. Die Entlüftungsdüse mündet vorteilhaft in den Spülluftkanal hinter dessen Drosselstelle.

In weiterer Ausgestaltung der Erfindung kann schließlich an der Ausgangsseite des Hohlfadenbündels in Strömungsrichtung der Nutzluft vor dem Absperrventil ein Bypasskanal für die Spülluft, in den eine vorzugsweise einstellbare Drossel eingebaut ist, vorgesehen sein, der vom Nutzluftkanal abzweigt und in den Spülluftkanal mündet. Diese kleindimensionierte Umgehung der Spülluftleitung bewirkt, daß der Membrantrockner dauernd von einer verhältnismäßig sehr geringen Spülluftmenge durchflossen wird, was eine Abführung der Feuchtigkeit aus dem Hohlfadenbündel auch dann sicherstellt, wenn sich der Membrantrockner in einem Betriebszustand unter der Ansprechgrenze des Absperrventils befindet. Dadurch wird der Trockner in ständiger Betriebsbereitschaft gehalten, so daß bei neuerlichem Ansprechen des Trockners und Einsetzen des Luftdurchsatzes unverzüglich getrocknete Nutzluft entnommen werden kann. Da auch in längeren Betriebspausen des Membrantrockners aufgrund der komprimierten Druckluft im Hohlfadenbündel Feuchtigkeit durch die Membranen der Hohlfäden hindurchdiffundiert, wird diese Feuchtigkeit schon im Ruhezustand des Membrantrockners ohne nennenswerten Spülluftverbrauch abgeführt, so daß praktisch durch diese kleine Ausgestaltung der erfindungsgemäßen Membrantrockner ständig einsatzbereit ist.

Weitere Einzelheiten und Vorteile der Erfindung ergeben sich aus der nachfolgenden Beschreibung von Ausführungsbeispielen, die in der Zeichnung dargestellt sind. In dieser zeigen: Fig. 1 einen Längsschnitt durch einen bekannten Membrantrockner nach dem Stand der Technik, Fig. 2 zeigt einen Längsschnitt durch ein Ausführungsbeispiel eines erfindungsgemäßen Membrantrockners und Fig. 3 zeigt eine vorteilhafte Ausführungsform eines Membrantrockners mit Membranventil.

Die im wesentlichen schematisch dargestellten Ausführungsbeispiele eines Membrantrockners bestehen aus einem Gehäuse 1 mit einem zylindrischen, hohlen Mittelteil 2, der an seinen beiden Enden durch Deckel 3 und 4 abgeschlossen ist. Im Deckel 3 ist ein Anschluß 5 für die Zuführung der zu trocknenden Luft in den hohlen Mittelteil 2 und im Deckel 4 ein Anschluß 6 für die Weiterleitung der getrockneten Luft zum Verbraucher vorgesehen. Abweichend von den Ausführungsbeispielen kann das Gehäuse 1 statt einem zylindrischen auch einen beliebigen anderen Querschnitt aufweisen, z.B. quadratisch oder vieleckig sein.

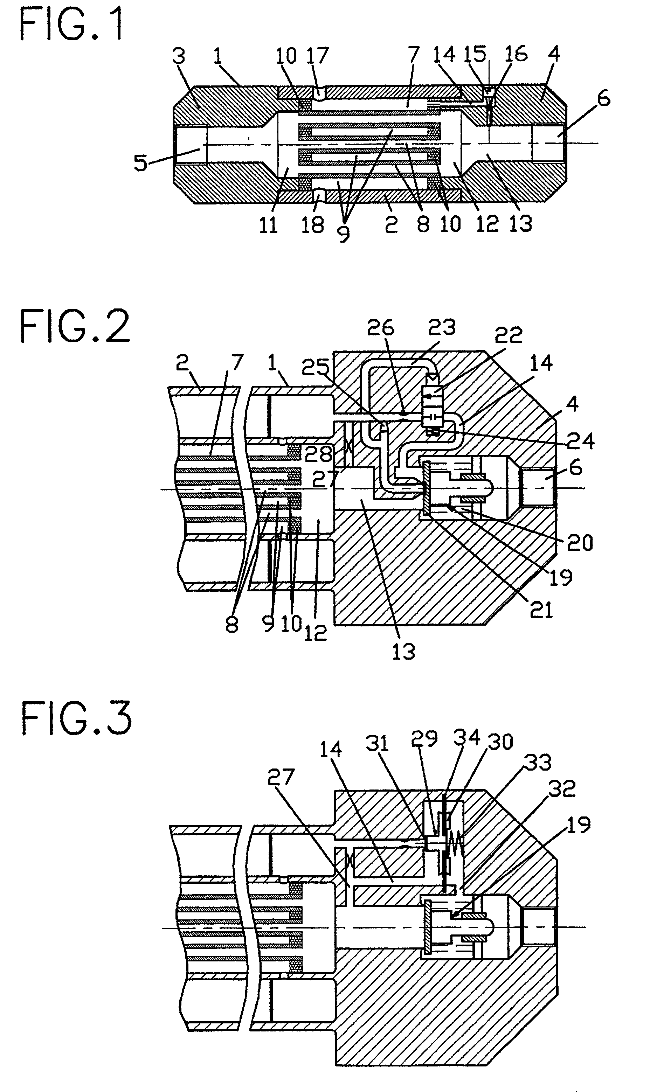

Im hohlen Mittelteil 2 ist ein Hohlfadenbündel 7 angeordnet, durch das die zu trocknende komprimierte Druckluft hindurchgeführt wird. Die Hohlfäden bestehen aus einer für Wasserdampf hochselektiven Membran, an deren Innenseite der Wasserdampf absorbiert wird und dann durch die dünne selektive Schicht diffundiert, bis die Wasserdampfmoleküle die Außenseite der Membran erreicht haben. In den Ausführungsbeispielen sind die Hohlfäden, die insbesondere in Fig. 1 stark vergrößert dargestellt sind, mit 8 und die Zwischenräume zwischen den Hohlfäden mit 9 bezeichnet. Wie aus den Zeichnungen ersichtlich ist, sind die Zwischenräume 9 im Bereich der Enden der Hohlfäden 8 durch Dichtungsmittel 10, z.B. durch durchbrochene Querwände, abgeschlossen.

Die durch den Anschluß 5 zugeführte Druckluft gelangt durch den Deckel 3 auf die mit 11 bezeichnete Eingangsseite des Hohlfadenbündels 7 und durch die Hohlfäden 8 hindurch zu der mit 12 bezeichneten Ausgangsseite, von der durch den Deckel 4 ein Nutzluftkanal 13 zum Anschluß 6 für die getrocknete Nutzluft führt. Vom Nutzluftkanal 13 zweigt ein Spülluftkanal 14 ab, der abgewinkelt ist und in den eine Drosselschraube 15 eingebaut ist. Der Spülluftkanal 14 mündet in die Zwischenräume 9 zwischen den Hohlfäden 8 des Hohlfadenbündels 7. Dadurch wird, wie aus Fig. 1 ersichtlich ist, ein durch die Drosselschraube 15 einstellbarer Spülluftstrom durch den Spülluftkanal 14 von der getrockneten Nutzluft abgezweigt, durch die durch die Drosselschraube 15 gebildete Drosselstelle 16 entspannt und in die Zwischenräume 9 zwischen den Hohlfäden 8 zurückgeleitet, wo sie im Gegenstrom den Hohlfäden 8 entlanggeführt wird, dabei den durch die Hohlfäden 8 diffundierten Wasserdampf aufnimmt und im Bereich der Eingangsseite 11 des Hohlfadenbündels 7 durch Austrittsöffnungen 17 und 18 in der Wandung des Mittelteils 2 des Gehäuses 1 zusammen mit dem aufgenommenen Wasserdampf ins Freie entweicht. Auf diese Weise ist die durch den Anschluß 6 austretende Nutzluft weitgehend trocken.

Aus Fig. 1 ist zu erkennen, daß der Spülluftkanal 14, abgesehen von der durch die Drosselschraube 15 gebildeten Drosselstelle 16, dauernd offen ist, unabhängig davon, ob durch den Anschluß 6 vom angeschlossenen Verbraucher getrocknete Nutzluft entnommen wird oder nicht. Dies hat zur Folge, daß insbesondere bei schwankendem Luftdurchsatz der Membrantrockner dauernd einen verhältnismäßig großen Spülluftverbrauch aufweist, der über 30 % der den Membrantrockner durchströmenden gesamten Luftmenge ausmachen kann.

Beim Ausführungsbeispiel nach Fig. 2 ist in den Nutzluftkanal 13 ein als Strömungsfühler wirkendes Absperrventil 19 eingebaut, das durch eine Feder 20 belastet ist und den Nutzluftkanal 13 abschließt, wenn keine Nutzluft entnommen wird. In den Spülluftkanal 14, der in Strömungsrichtung vor dem Absperrventil 19 vom Nutzluftkanal 13 abzweigt, ist ein eigenes Spülluftventil 22, z.B. ein 2/2-Wegeventil eingebaut, das über eine eigene Steuerleitung 23 gegen die Kraft einer Rückstellfeder 24 betätigt ist. Diese Steuerleitung 23 geht gleichfalls vom Nutzluftkanal 13 aus und ist durch das Verschlußstück 21 des Absperrventils 19 gesteuert. Die Steuerleitung 23 ist außerdem mit einer dauernd offenen Entlüftungsdüse 25 versehen, die zweckmäßig in den Spülluftkanal 14 mündet.

Die Entlüftungsdüse 25 bewirkt eine Druckentlastung der Steuerleitung 23, sobald diese durch das Verschlußstück 21 des Absperrventils 19 geschlossen wird, so daß auch das Spülluftventil 22 unter dem Einfluß der Rückstellfeder 24 in seine Schließstellung zurückkehren kann und die Spülluftleitung 14 absperrt. In die Spülluftleitung 14 ist auch bei diesem Ausführungsbeispiel in Strömungsrichtung hinter dem Spülluftventil 22 eine Drosselstelle 26 eingebaut, die eine Expansion der hindurchströmenden Spülluft bewirkt.

An der Ausgangsseite 12 des Hohlfadenbündels 7 zweigt schließlich vom Nutzluftkanal 13 noch ein Bypasskanal 27 ab, in den eine Drossel 28 eingebaut ist und der in den Spülluftkanal 14 mündet. Der Bypasskanal 27 ist dauernd offen und stellt sicher, daß auch bei geschlossenem Absperrventil 19 eine kleine Menge Spülluft durch das Hohlfadenbündel 7 hindurchströmt. Dadurch wird erreicht, daß der auch bei geschlossenem Absperrventil 19 durch die Hohlfäden 8 des Hohlfadenbündels 7 diffundierende Wasserdampf abgeführt und so der Membrantrockner dauernd in Betriebsbereitschaft gehalten wird. Außerdem sorgt dieser Bypasskanal 27 für die Trocknung der Luft bei Durchflußmengen, die unter der Ansprechgrenze des Absperrventils 19 liegen.

Bei der in Fig. 3 dargestellten Ausführungsform des Membrantrockners mit einem Membranventil 29 als Spülluftventil zweigt der Spülluftkanal 14 beispielsweise vom Bypasskanal 27 ab und führt auf die Seite des Membranventils 29, auf der sich auch der durch das Dichtelement 30 geöffnete oder geschlossene Ventilsitz 31 befindet. Während das Membranventil 29 nur bei Entnahme von Nutzluft aus dem Membrantrockner geöffnet werden soll, ist eine Passage 32 vom Bereich hinter dem Absperrventil 19, gesehen in Strömungsrichtung der Nutzluft, auf die dem Ventilsitz 31 gegenüberliegende Seite des Dichtelementes 30 vorgesehen. Die Feder 33 sorgt, allenfalls zusammen mit einer definierten Vorspannung der das Dichtelement 30 haltenden Membran 34 auf den Ventilsitz 31 hin, für ein sicheres Schließen des Ventils 29, solange keine Nutzluft entnommen wird.

## Patentansprüche

1. Membrantrockner für feuchte Luft, mit einem Gehäuse (1), das an der Eingangsseite (11) einen Anschluß 15) für die Zuführung der zu trocknenden Luft und an der Ausgangsseite (12) einen Anschluß (6) für die Ableitung der getrockneten Nutzluft aufweist, und mit einem im Gehäuse (1) angeordneten Hohlfadenbündel (7), dessen Hohlfäden (8) aus einer für Wasserdampf hochselektiven Membran bestehen, wobei die zu trocknende komprimierte Luft durch die Hohlfäden (8) des Hohlfadenbündels (7) hindurchgeleitet wird, an dessen Ausgangsseite (12) ein Spülluftkanal (14) abzweigt, in den eine Drosselstelle (16) zum Expandieren der Spülluft eingebaut und der in das Hohlfadenbündel (7) im Gehäuse (1) zurückgeführt ist, in dem die an der Drosselstelle (16) expandierte Spülluft im Gegenstrom den Hohlfäden (8) außen entlanggeführt ist, wobei sie den durch die Hohlfäden (8) diffundierten Wasserdampf aufnimmt und im Bereich der Eingangsseite (11) des Hohlfadenbündels (7) ins Freie abführt, wobei ein durch die Nutzluft gesteuertes, als Strömungsfühler wirkendes selbsttätiges Absperrventil (19), z.B. ein federbelastetes Rückschlagventil, vorgesehen ist, **dadurch gekennzeichnet, daß** in den Spülluftkanal (14) ein eigenes Spülluftventil (22), z.B. ein 2/2-Wegeventil, eingebaut ist, das über eine vom Nutzluftkanal (13) abzweigende und vom Absperrventil (19) gesteuerte Steuerleitung (23) betätigt ist.

2. Membrantrockner nach Anspruch 1, **dadurch gekennzeichnet, daß** das Spülluftventil (22) als Membranventil ausgeführt ist, das in Öffnungsrichtung über einen vor dem Absperrventil (19) abzweigenden Kanal und in Schließrichtung über einen hinter dem Absperrventil (19) abzweigenden Kanal beaufschlagt ist.

3. Membrantrockner nach Anspruch 1 oder 2, **dadurch gekennzeichnet, daß** die Steuerleitung (23) mit einer dauernd offenen Entlüftungsdüse (25) versehen ist.

4. Membrantrockner nach Anspruch 3, **dadurch gekennzeichnet, daß** die Entlüftungsdüse (25) in den Spülluftkanal (14) in Strömungsrichtung hinter dessen Drosselstelle (16) mündet.

5. Membrantrockner nach einem der Ansprüche 1 bis 4, **dadurch gekennzeichnet, daß** an der Ausgangsseite (12) des Hohlfadenbündels (7) in Strömungsrichtung der Nutzluft vor dem Absperrventil (19) ein Bypasskanal (27) für die Spülluft, in den eine vorzugsweise einstellbare Drossel (28) eingebaut ist, vorgesehen ist, der vom Nutzluftkanal (13) abzweigt und in den Spülluftkanal (14) mündet.

## Claims

1. A membrane dryer for humid air, comprising a housing (1) having a connection (5) at the inlet end (11) for supplying the air to be dried and a connection (6) at the outlet end (12) for discharging the dried useful air, and comprising a hollow-fibre bundle (7) arranged in the housing (1), the hollow fibres (8) of said bundle (7) comprising a membrane which is highly selective for water vapour, wherein the compressed air to be dried is passed through the hollow fibres (8) of the hollow-fibre bundle (7), at the outlet end (12) of which a scavenging-air duct (14) branches off, into which a throttle point (16) for expanding the scavenging air is incorporated and which leads back into the hollow-fibre bundle (7) in the housing (1), the scavenging air expanded at the throttle point (16) being fed along the outside of the hollow fibres (8) in the housing (1) in counterflow, wherein the scavenging air absorbs the water vapour diffused through the hollow fibres (8) and is discharged into the open air in the region of the inlet end (11) of the hollow-fibre bundle (7), wherein an automatic shut-off valve (19) is provided, e.g. a spring-loaded non-return valve, controlled by the useful air and acting as a flow sensor, **characterised in that** a separate scavenging-air valve (22), e.g. a 2/2 directional valve, is incorporated into the scavenging-air duct (14) and is actuated by a control line (23) branching off the useful-air duct (13) and controlled by the shut-off valve (19).

2. A membrane dryer according to claim 1, **characterised in that** the scavenging-air valve (22) is formed as a membrane valve acted upon in the opening direction via a duct branching off upstream of the shut-off valve (19) and in the closing direction via a duct branching off downstream of the shut-off valve (19).

3. A membrane dryer according to claim 1 or 2, **characterised in that** the control line (23) is provided with a permanently open vent nozzle (25).

4. A membrane dryer according to claim 3, **characterised in that** the vent nozzle (25) opens into the scavenging-air duct (14) in the flow direction downstream of the throttle point (16) thereof.

5. A membrane dryer according to any one of claims 1 to 4, **characterised in that** a bypass duct (27) for the scavenging air, into which a preferably adjustable throttle (28) is incorporated, is provided at the outlet end (12) of the hollow-fibre bundle (7) in the flow direction of the useful air upstream of the shut-off valve (19) and branches off the useful-air duct (13) and opens into the scavenging-air duct (14).

## Revendications

1. Séchoir à membrane pour air humide, comportant un boîtier (1), qui comporte, sur le côté entrée (11), un raccord (5) pour l'amenée de l'air à sécher et, sur le côté sortie (12), un raccord (6) pour l'évacuation de l'air utile sec, et un faisceau de fils creux (7), qui est disposé dans le boîtier (1) et dont les fils creux (8) sont constitués par une membrane hautement sélective pour la vapeur d'eau, et dans lequel l'air comprimé à sécher est dirigé à l'intérieur des fils creux (8) du faisceau de fils creux (7), sur le côté sortie (12) duquel s'étend en dérivation un canal (14) d'air de balayage, dans lequel est monté un point d'étranglement (16) servant à produire la détente de l'air de balayage et qui revient au faisceau de fils creux (7) dans le boîtier (1), dans lequel l'air de balayage détendu au niveau du point d'étranglement (16), est guidé extérieurement le long des fils creux (8) à contre-courant de la circulation dans les fils creux (8), et dans lequel l'air de balayage reçoit la vapeur d'eau diffusée par les fils creux (8) et l'évacue à l'air libre dans la zone du côté entrée (11) du faisceau de fils creux (7), et dans lequel il est prévu une soupape d'arrêt automatique (19), qui est commandée par l'air utile, et agit en tant que détecteur d'écoulement, par exemple une soupape antiretour chargée par un ressort, **caractérisé en ce que** dans le canal d'air de balayage (14) est montée une soupape particulière (22) pour l'air de balayage, par exemple une soupape à 2/2 voies, qui est actionnée par l'intermédiaire d'une canalisation de commande (23) qui s'étend en dérivation à partir du canal (13) pour l'air utile et est commandée par la soupape d'arrêt (19).

2. Séchoir à membrane selon la revendication 1, **caractérisé en ce que** la soupape (22) pour l'air de balayage est agencée sous la forme d'une soupape à membrane, qui est chargée dans le sens de l'ouverture par l'intermédiaire d'un canal, qui s'étend en dérivation en amont de la soupape d'arrêt (19), et, dans le sens de la fermeture, par l'intermédiaire d'un canal qui s'étend en dérivation en aval de la soupape d'arrêt (19).

3. Séchoir à membrane selon la revendication 1 ou 2, **caractérisé en ce que** la canalisation de commande (23) est équipée d'une buse de désaération (25) ouverte en permanence.

4. Séchoir à membrane selon la revendication 3, **caractérisé en ce que** la buse de désaération (25) débouche dans le canal (14) pour l'air de balayage, en aval du point d'étranglement (16) de ce canal dans la direction d'écoulement.

5. Séchoir à membrane selon l'une des revendications 1 à 4, **caractérisé en ce que** sur le côté sortie (12) du faisceau de fils creux (7) est prévu en amont de la soupape d'arrêt (19), dans la direction de circulation de l'air utile, un canal de by-pass (27) pour l'air de balayage, dans lequel est monté un étranglement (28), de préférence réglable, qui s'étend en dérivation à partir du canal (13) pour l'air utile et débouche dans le canal (14) pour l'air de balayage.
